# FASCICULE DE BREVET EUROPEEN

(11) **EP 1 922 143 B1**
(45) Date de publication et mention de la délivrance du brevet: **24.11.2010**
(21) Numéro de dépôt: 06794310.0
(22) Date de dépôt: 07.08.2006
(51) Int. Cl.: C10G 25/05, C10G 29/20, B01J 38/56, B01J 27/28, B01J 31/40, B01J 29/90

(54) **PROCÉDÉ DE DÉSULFURATION D'ESSENCES OLÉFINIQUES PAR ALOURDISSEMENT DES COMPOSÉS SOUFRÉS AVEC RÉGÉNÉRATION DU CATALYSEUR**
VERFAHREN ZUR ENTSCHWEFELUNG VON OLEFINISCHEN BENZINEN, UMFASSEND GEWICHTSERHÖHUNG VON SCHWEFELVERBINDUNGEN MIT KATALYSATORREGENERATION
METHOD FOR THE DESULPHURISATION OF OLEFINIC GASOLINES, COMPRISING SULPHUR COMPOUND WEIGHTING WITH CATALYST REGENERATION

(30) Priorité: 26.08.2005 FR 0508844
(43) Date de publication de la demande: 21.05.2008
(73) Titulaire: Institut Français du Pétrole, 92852 Rueil Malmaison Cedex (FR)
(72) Inventeur: PICARD, Florent, F-69360 Saint Symphorien d'Ozon (FR); DANZO, Thierry, F-38270 Primarette (FR)
(86) Numéro de dépôt international: PCT/FR2006/001927
(87) Numéro de publication internationale: WO 2007/023216

(56) Documents cités:
- US-A- 5 599 441
- US-A- 5 863 419
- US-A- 6 024 865
- US-A- 6 059 962
- BRUNET S ET AL: "On the hydrodesulfurization of FCC gasoline: a review" APPLIED CATALYSIS A: GENERAL, ELSEVIER SCIENCE, AMSTERDAM, NL, vol. 278, no. 2, 10 janvier 2005 (2005-01-10), pages 143-172, XP004706151 ISSN: 0926-860X
- ANONYMOUS: "AMBERLYST Polymeric Catalyst and Ion Exchange Resins" ROHM AND HAAS, [Online] 22 juin 2003 (2003-06-22), XP002376914 Extrait de l'Internet: URL:http://web.archive.org/web/20030622124 149/http://www.rohmhaas.com/ionexchange/IP /sac.htm> [extrait le 2006-04-12]

## Description

### DOMAINE DE L'INVENTION

La présente invention se rapporte à un procédé de désulfuration d'essences oléfiniques comportant une réaction d'alourdissement des composés soufrés par alkylation avec les oléfines contenues dans la charge au moyen d'un catalyseur acide et comportant une phase de régénération du dit catalyseur qui peut être opérée de manière séquentielle ou continue.

Le présent procédé trouve particulièrement son application dans le traitement des essences de conversion, et en particulier des essences produites par craquage catalytique, cokéfaction, viscoréduction, ou pyrolyse.

Le procédé objet de la présente invention permet de valoriser une coupe essence comprenant éventuellement des hydrocarbures à trois ou quatre atomes de carbone, en réduisant la teneur en soufre total de ladite coupe à de très faibles niveaux, compatibles avec les spécifications actuelles ou à venir, sans diminution sensible du rendement en essence et de l'indice d'octane.

La production d'essences répondant aux nouvelles normes d'environnement nécessite que l'on diminue leurs teneurs en soufre à des valeurs n'excédant généralement pas 50 ppm, et préférentiellement inférieures à 10 ppm.

Il est par ailleurs connu que les essences de conversion, et plus particulièrement celles provenant du craquage catalytique présentent des teneurs en oléfines et en soufre élevées, et représentent en moyenne de 30 % à 50 % du pool essence.

Le soufre présent dans les essences est pour cette raison imputable à près de 90 %, aux essences issues des procédés de craquage catalytique, qu'on appellera dans la suite essence de FCC (FCC désignant l'abréviation de craquage catalytique en lit fluidisé). Les essences de FCC constituent donc la charge préférée du procédé de désulfuration de la présente invention.

Plus généralement, le procédé de désulfuration selon l'invention est applicable à toute coupe essence contenant une certaine proportion d'oléfines, et pouvant contenir en outre quelques composés plus légers appartenant aux coupes C3 et C4. La charge essence du dit procédé peut en outre également être mélangée à des alcools du type méthanol, éthanol, ou éventuellement des alcools plus lourds.

### EXAMEN DE L'ART ANTERIEUR

Une première voie de désulfuration très couramment utilisée en raffinerie consiste en l'hydrodésulfuration des essences. Pour atteindre les normes actuellement exigées en utilisant de tels procédés, il s'avère nécessaire d'opérer à des conditions de température et de pression sévères, et notamment de travailler sous forte pression d'hydrogène.

De telles conditions entraînent une consommation importante d'hydrogène, généralement une hydrogénation au moins partielle des oléfines, et consécutivement, une diminution sensible de l'indice d'octane des essences désulfurées obtenues par les dits procédés.

Une autre voie consiste à utiliser des procédés de désulfuration des essences basés sur un traitement faisant appel à un catalyseur acide. Ce type de traitement a pour but d'alourdir les composés soufrés insaturés de type thiophéniques par une réaction d'addition (ou plus précisément d'alkylation) sur lesdits composés soufrés insaturés, des oléfines présentes dans la charge, et par une voie parallèle, d'oligomériser une fraction des dites oléfines contenues dans la charge.

Par exemple, les brevets US 6,059,962 et FR2810671 et US 5,599,441 décrivent de tels procédés. Les composés soufrés insaturés thiophéniques réagissent avec les oléfines en présence d'un catalyseur acide, la réaction entraînant un alourdissement desdits composés thiophèniques. Les thiols peuvent également réagir avec les oléfines pour former des sulfures eux aussi alourdis.

Les composés soufrés alourdis peuvent ensuite être séparés par une simple distillation. Une essence à faible teneur en soufre est récupérée en tête de colonne de distillation. Les catalyseurs acides décrits dans les précédents brevets sont généralement des catalyseurs solides présentant une acidité de Brönstedt, tels que les résines échangeuses d'ions ou les acides sulfuriques ou phosphoriques supportés, mais également les catalyseurs à base de silice et d'alumine, tels que les silice-alumine amorphes ou les zéolithes.

Les catalyseurs acides mis en oeuvre dans le but de faire réagir les oléfines sur les composés soufrés ont généralement une durée de vie limitée par dépôt d'agents de désactivation sur la surface catalytique, dépôt qui empêche les réactifs d'accéder aux sites catalytiques.

Des procédures de régénération ou de réactivation des catalyseurs usés sont décrites dans la littérature pour des procédés utilisant des catalyseurs acides dans le but d'oligomériser les oléfines, ou d'alkyler les composés aromatiques par des oléfines.

Par exemple, le brevet US 4,062,801 propose une méthode pour régénérer des catalyseurs acides par la mise en oeuvre de cycles comprenant plusieurs étapes d'immersion du catalyseur dans un liquide aromatique chaud, puis de drainage du liquide aromatique.

Le brevet US 6,025,534 propose une méthode de régénération de catalyseurs acides utilisée pour polymériser les oléfines, sans décharger le réacteur, consistant à remplacer, pendant la phase de régénération, la charge oléfinique par une charge de régénération contenant des composés aromatiques tels que le rapport molaire entre les oléfines et les aromatiques soit compris entre 1 et 10.

Toutefois, aucune solution n'est décrite dans l'art antérieur pour régénérer les catalyseurs acides mis en oeuvre pour réaliser l'alkylation des composés soufrés par les oléfines dans les essences oléfiniques.

### DESCRIPTION SOMMAIRE DE L'INVENTION

La présente invention concerne un procédé de désulfuration d'essence soufrée, et contenant des oléfines. Le principe de la désulfuration consiste à faire réagir, par une réaction d'alkylation, les oléfines sur les composés soufrés contenus dans l'essence à traiter. Les composés soufrés constituant les effluents de la réaction d'alkylation sont alourdis par rapport aux composés soufrés initiaux, de sorte qu'on qualifie également la réaction mis en jeu dans le procédé, de réaction d'alourdissement des composés soufrés.

Le traitement des essences oléfiniques sur catalyseur acide dans le but de transformer les composés soufrés par addition d'oléfines selon la réaction d'alkylation, s'accompagne généralement d'un phénomène de désactivation du catalyseur. Cette désactivation se traduit par une diminution de l'activité du catalyseur, et la nécessité d'augmenter la température pour compenser cette perte progressive d'activité.

La désactivation décrite ci-dessus représente un inconvénient majeur pour le procédé et nécessite, à terme, le remplacement du dit catalyseur.

Le remplacement du catalyseur suppose que le réacteur soit mis hors service pendant la durée de déchargement et de rechargement du catalyseur.

La présente invention décrit en particulier une méthode de régénération du catalyseur qui peut être mise en oeuvre sans déchargement du catalyseur du réacteur, et même éventuellement sans interruption de la réaction d'alourdissement des composés soufrés.

Cette procédure permet aussi de maintenir le catalyseur à un haut niveau d'activité pendant toute sa durée de vie.

Le procédé de désulfuration selon l'invention s'applique à une coupe essence contenant des oléfines, des composés soufrés, et éventuellement des molécules appartenant aux coupes C3 et C4.

Il comprend au moins les 3 étapes A, B et C décrites dans la revendication 1.

Le rapport molaire entre les composés oléfiniques et les composés aromatiques de l'agent de régénération, est compris entre 0 et 1, de façon préférée entre 0 et 0,5, et de façon encore préférée entre 0 et 0, 25.

Le catalyseur utilisé pour effectuer la réaction d'alkylation des composés soufrés par les oléfines contenues dans la charge à traiter est un catalyseur acide choisi parmi les résines acides, échangeuses d'ions, les catalyseurs contenant de l'acide phosphorique en mélange avec de la silice, ou différents type de zéolithes qui seront détaillées plus loin. Lorsque le catalyseur est choisi parmi les résines, la résine acide présente une capacité acide supérieure à 4,7 équivalents par kg, et préférentiellement supérieure à 5,0 équivalents par kg.

Généralement la résine acide utilisée présente un volume poreux inférieur à 0,50 ml/g. Lorsque le catalyseur utilisé contient de l'acide phosphorique mélangé à de la silice, la teneur en acide phosphorique est généralement supérieure à 50% poids.

Le catalyseur utilisé dans l'étape d'alkylation peut également être une zéolithe choisie dans le groupe constitué des zéolithes Y, beta, ZSM-5, ZSM-3 et ZSM-20, ZSM-57, NU-88, NU-87, NU-86, EU-1.

Le procédé de désulfuration d'une coupe essence selon l'invention fait appel à des conditions opératoires dont certaines peuvent dépendre du catalyseur choisi. De manière générale, la température opératoire de la réaction est comprise entre 30°C et 300°C, la pression opératoire est comprise 0,5 MPa et 6,0 MPa ( 1MPa = 10⁶ pascals), et la VVH est comprise entre 0,1 h⁻¹ et 10 h⁻¹, et de préférence entre 0,5 h⁻¹ et 5 h⁻¹ par réacteur.

La température utilisée dans l'étape de régénération est généralement supérieure ou égale à la température de l'étape de réaction, tout en restant inférieure à 180°C, lorsque le catalyseur utilisé est une résine acide ou inférieure à 300°C, lorsque le catalyseur utilisé est de l'acide phosphorique ou une zéolithe.

Lorsque la charge à traiter contient plus de 20 ppm d'azote, et préférentiellement plus de 50 ppm d'azote, la dite charge peut être prétraitée dans une étape d'extraction des composés azotés.

Cette étape peut consister en un lavage par une solution aqueuse, de préférence acide, une captation sur un solide, ou une combinaison des deux. Dans le cas de l'utilisation d'une masse de captation, il est possible d'utiliser comme solide de captation, le même catalyseur que celui utilisé pour la réaction avec un degré d'activité moindre.

Lorsque le catalyseur est une résine acide, il peut être mis en oeuvre en lit bouillonnant. La technologie du lit bouillonnant est particulièrement bien adaptée au prélèvement en continu de catalyseur usé en provenance du milieu réactionnel, et à son remplacement par du catalyseur frais.

Le procédé selon la présente invention s'applique particulièrement à la désulfuration d'une essence de FCC de point d'ébullition inférieur à 230°C, préférentiellement inférieur à 160°C, et de manière encore préférée inférieure à 130°C.

### DESCRIPTION DETAILLEE DE L'INVENTION

La présente invention concerne un procédé catalytique par catalyse acide, de transformation des composés soufrés contenus dans une charge hydrocarbonée oléfinique, consistant en l'addition des oléfines présentes dans la charge sur les dits composés soufrés.

Le procédé selon l'invention est particulièrement adapté pour traiter des essences contenant du soufre et des oléfines. Ces composés sont présents simultanément dans les essences de conversion, et en particulier dans les essences issues du craquage catalytique, du craquage catalytique en lit fluide (FCC), d'un procédé de cokéfaction, d'un procédé de viscoréduction, d'un procédé de pyrolyse.

Les essences provenant d'une de ces unités ou d'une combinaison des dites unités, contiennent généralement au moins 30 ppm de soufre et 10% d'oléfines.

Le point final des charges est généralement inférieur à 230°C, mais on traitera, de préférence, des essences dont la température d'ébullition est inférieure à 160°C, et de préférence inférieure à 130°C. Ces charges peuvent également contenir en outre des fractions hydrocarbonées à 3 ou 4 atomes de carbone.

Elles contiennent généralement plus de 10% poids d'oléfines, et le plus souvent plus de 20% poids d'oléfines. Les oléfines présentes dans ces charges sont généralement des oléfines contenant 3 à 12 atomes de carbone, et le plus souvent, des oléfines contenant 4 à 7 atomes de carbone.

Les charges concernées par la présente invention contiennent également des composés aromatiques dont la teneur peut varier entre 0,5% poids et 60% poids, et le plus souvent entre 1 % poids et 50 % poids. Les composés aromatiques sont principalement présents sous forme de benzène, toluène, xylènes et autres alkyl benzènes, et éventuellement sous forme de naphtalène et d'alkylnaphtalènes. Les autres composés présents dans l'essence sont des composés de type paraffine ou naphtène qui ne réagissent généralement pas dans le cadre du présent procédé.

L'agent de régénération utilisé pour restaurer l'activité du catalyseur permet d'extraire les composés déposés sur le catalyseur et qui ont entraîné sa désactivation.

L'agent de régénération est constitué d'une fraction hydrocarbonée aromatique.

La fraction hydrocarbonée aromatique utilisée pour régénérer le catalyseur diffère de la charge par une teneur en composés aromatiques significativement plus élevée.

On appellera dans la suite du texte cette fraction hydrocarbonée aromatiques, fraction aromatique de régénération.

La teneur en aromatiques de la fraction aromatique de régénération est telle que le rapport molaire entre les composés oléfiniques et les composés aromatiques de ladite fraction est compris entre 0 et 1, de façon préférée entre 0 et 0,5, et de façon très préférée entre 0 et 0,25.

Les composés aromatiques contenus dans la fraction aromatique de régénération incluent les composés aromatiques contenant entre 6 et 20 atomes de carbone, et de préférence contenant entre 6 et 12 atomes de carbone.

L'essence issue du reformage catalytique est une source privilégiée de composés aromatiques, et peut donc être utilisée par régénérer le catalyseur du procédé objet de la présente invention.

La fraction aromatique de régénération peut être constituée d'un mélange de fractions hydrocarbonées choisies parmi les essences de craquage thermique ou catalytique, les essences de distillation directe, les essences issues d'unités de reformage catalytique, les essences issues d'unités d'isomérisation, ou de toute autre fraction hydrocarbonée.

On utilisera de préférence, pour réactiver le catalyseur d'alkylation des thiophéniques et des thiols, une fraction hydrocarbonée aromatique dont la teneur en azote est inférieure à 100 ppm, et de façon très préférée inférieure à 50 ppm.

Les catalyseurs qui sont utilisés pour le procédé de transformation des composés soufrés par alourdissement sont des catalyseurs acides selectionnés dans le groupe constitué par les résines acides, l'acide phosphorique supporté sur silice et les zéolithes.

Les résines utilisées de préférence sont des résines de type polystyrène sulfonées acides telles que les résines Amberlyst 15, Amberlyst 35 ou Amberlyst 36 produits par la société Rhom & Haas, ou toute autre résine acide. De préférence, on utilisera une résine caractérisée par une capacité acide supérieure à 4,7 équivalents par kg, et de préférence supérieure à 5,0 équivalents par kg.

Les équivalents par kg correspondent au nombre de moles de protons par kg de résine.

Le volume poreux de la résine sera généralement compris entre 0,10 ml/g et 0,50 ml/g, de préférence entre 0,15 ml/g et 0,40 ml/g, et de façon très préférée compris entre 0,16 ml/g et 0,25 ml/g. Le diamètre moyen des pores est compris entre 10 nm et 40 nm, de façon préférée compris entre 20 nm et 30 nm, et de façon encore préférée compris entre 20 nm et 28 nm.

On pourra utiliser de l'acide phosphorique supporté sur silice, également appelé SPA, et par ailleurs utilisé dans les procédés de polymérisation des oléfines ou d'alkylation du benzène.

Ce dernier type de catalyseur est caractérisé par une teneur en acide phosphorique supérieure à 50% poids et de préférence supérieur à 60% poids.

Les zéolites sont de type suivant: MEL, MFI, ITH, NES, EUO, ERI, FER, CHA, MFS, MWW, MTT, TON, MAZ, MEI, MOR, FAU, BEA, BOG, LTL, OFF.

Parmi les zéolithes de type structural MEL, la zéolithe ZSM-11 est préférée.

Parmi les zéolithes de type structural MFI, la zéolithe ZSM-5 et la ZSM-23 sont préférées.

Parmi les zéolithes de type structural ITH, la zéolithe ITQ-13 est préférée.

Parmi les zéolithes de type structural NES, la zéolithe NU-87 est préférée.

Parmi les zéolithes de type structural EUO, la zéolithe EU-1 est préférée.

Parmi les zéolithes de type structural ERI, la zéolithe erionite est préférée.

Parmi les zéolithes de type structural FER, les zéolithes ferriérite et ZSM-35 sont préférées.

Parmi les zéolithes de type structural CHA, la zéolithe chabazite est préférée.

Parmi les zéolithes de type structural MFS, la zéolithe ZSM-57 est préférée.

Parmi les zéolithes de type structural MWW, la zéolithe MCM-22 est préférée.

Parmi les zéolithes de type structural MTT, la zéolithe ZSM-23 est préférée.

Parmi les zéolithes de type structural MAZ, les zéolithes oméga et ZSM-4 sont préférées.

Parmi les zéolithes de type structural MEI, la zéolithe ZSM-18 est préférée.

Parmi les zéolithes de type structural MOR, la zéolithe mordénite est préférée.

Parmi les zéolithes de type structural FAU, la zéolithe Y est préférée.

Parmi les zéolithes de type structural BEA, la zéolithe bêta est préférée.

Parmi les zéolithes de type structural BOG, la zéolithe boggsite est préférée.

Parmi les zéolithes de type structural LTL, la zéolithe L est préférée.

Parmi les zéolithes de type structural OFF, la zéolithe offretite est préférée.

Les zéolithes ZSM-3 et ZSM-20, zéolithes de type structural intermédiaire entre EMT et FAU sont également préférentiellement utilisables. Les zéolithes NU-86 et NU-88 sont également préférentiellement utilisables. Toutes les zéolithes décrites ci-dessus peuvent être utilisées seules ou en mélange.

Le catalyseur à base de zéolithe selon l'invention peut avoir subi un ou plusieurs traitements faisant changer son acidité. Les traitements préférés sont les traitements de désalumination par toutes les méthodes connues de l'homme du métier, les substitution de protons par des cations métalliques et/ou alcalins, et/ou alcalino-terreux par toutes les méthodes d'échanges ioniques ou d'imprégnations connues de l'homme du métier, par une passivation de la surface externe par dépôt d'une couche de silice amorphe via un dépôt en phase gazeuse (CVD, Chemical Vapor Deposition, d'après le terme anglo-saxon signifiant: dépôt chimique en phase vapeur) ou en phase liquide (CLD, ou Chemical Liquid Deposition, d'après le terme anglo-saxon signifiant: dépôt chimique en phase liquide) pour réduire l'acidité de la surface externe de la zéolithe.

Le procédé d'addition d'oléfines sur des composés soufrés contenus dans la charge à traiter, en présence d'un catalyseur acide, est généralement mis en oeuvre dans un réacteur contenant le catalyseur acide en lit fixe.

Le catalyseur peut également être indifféremment placé dans un réacteur à chambre ou dans un réacteur tubulaire.

Le réacteur tubulaire consiste en un ensemble de tubes contenant le catalyseur dans lesquels circule la charge à traiter, les tubes étant immergés au sein d'un fluide enfermé dans une calandre permettant de contrôler la température. Ce dispositif permet de contrôler la température dans le lit catalytique, et de limiter ainsi l'élévation de température le long du lit dans le cas de réactions exothermiques.

Selon un mode particulier de mise en oeuvre de l'invention, dans le cas où le catalyseur est constitué de résine acide, il est possible d'utiliser un réacteur à lit bouillonnant qui permet de limiter les points chauds dans le réacteur ainsi que l'élévation de température le long du lit.

Ce type de réacteur permet de réaliser un soutirage de catalyseur usé et un appoint de catalyseur frais ou régénéré en continu. Dans ce cas, et afin de permettre une mise en mouvement du lit catalytique, il est préférable d'utiliser un catalyseur dont la taille des particules est inférieur à 2 mm, et de préférence compris entre 0,2 mm et 1,5 mm.

Il est avantageux de mettre en oeuvre le procédé dans une pluralité de réacteurs opérés en série ou en parallèle. Ce type de configuration permet de contrôler la température de chaque réacteur, mais également de régénérer un réacteur contenant du catalyseur usé pendant que les autres réacteurs sont en opération. Les conditions opératoires du procédé sont déterminées en fonction de la charge à traiter, du type de catalyseur et de son niveau d'activité, afin d'atteindre les taux de conversion des composés soufrés désirés.

On travaillera, de préférence, à une température comprise entre 30°C et 300°C.

Dans le cas où le catalyseur utilisé est de la résine acide, la température est généralement comprise entre 30°C et 180°C, et de préférence entre 40°C et 170°C, car les résines polystyrène sulfoniques réticulées sont dégradées à haute température, ce qui peut entraîner une désactivation irréversible du catalyseur et des problèmes de corrosion.

Dans le cas des catalyseurs acides de type acide phosphorique supporté sur silice, on opérera les réacteurs à une température comprise généralement entre 100°C et 300°C, et de préférence entre 140°C et 250°C.

Dans le cas des catalyseurs acides de type zéolithes, on opérera les réacteurs à une température généralement comprise entre 100°C et 300°C, et de préférence entre 120°C et 270°C.

La pression opératoire des réacteurs est ajustée afin de maintenir la fraction hydrocarbonée contenue dans le réacteur en phase liquide. Ainsi, la pression sera généralement comprise entre 5 bars et 60 bars, et de préférence entre 1 MPa et 4 MPa (1 bar = 10⁵ pascal = 0,1 MPa ).

La quantité de catalyseur mise en oeuvre est telle que la VVH pour chaque réacteur est comprise entre 0,1 h-1 et 10 h⁻¹, et de préférence entre 0,5 h-1 et 5 h⁻¹.

La charge à désulfurer est substituée en totalité par l'agent de régénération, continûment ou par séquences, avec ce même agent riche en composés aromatiques.

Les conditions de température et de pression de la régénération sont généralement identiques aux conditions opératoires de la réaction d'alourdissement par alkylation. Toutefois, il est avantageux de réaliser la régénération dans la gamme haute des températures admissibles, à la fois pour la protection du catalyseur, et pour le bon fonctionnement des installations. La durée de la régénération doit être suffisante pour restaurer une partie significative de l'activité du catalyseur. La régénération est réalisée sur une période d'une durée comprise entre 10 heures et 100 heures.

La régénération peut être réalisée plusieurs fois au cours de la vie du catalyseur, en enchaînant plusieurs cycles successifs de désactivation et de régénérations afin de maximiser la durée de vie du catalyseur.

### EXEMPLES

### Exemple 1 (Comparatif)

L'exemple 1 qui suit montre la possibilité de régénérer le catalyseur utilisé, ici l'Amberlyst 15, au moyen d'une fraction aromatique de régénération constituée de toluène.

Une essence A prélevée sur une unité de craquage catalytique est caractérisée par:
- une teneur en soufre de 450 ppm, dont 110 ppm de thiophène, 20 ppm de mercaptans et 230 ppm de méthyl thiophène,
- une teneur en oléfines de 48,7 % poids,
- une teneur en composés aromatiques de 5,4% poids,
et un point final de distillation déterminé par distillation simulée de 132 °C.

Un réacteur d'un volume de 50 ml est chargé d'une résine acide commercialisée par la société Rhom & Haas sous le nom d'Amberlyst 15.
- Dans une première partie de l'expérience, la charge est mise en contact avec le catalyseur, à une pression de 2 MPa et une VVH de 1h⁻¹.

La température initiale est de 90°C pour une conversion du thiophène de 99%. Puis, la température est ajustée afin de réaliser une conversion du thiophène toujours comprise entre 90% et 99%. Le terme ajustement signifie que lorsque la conversion qui décroît au cours du temps suite à la désactivation continue du catalyseur atteint 90%, on augmente la température de réaction d'un incrément de 10°C, ce qui a pour effet de remonter la conversion à une valeur voisine de 99%. Après chaque incrément de 10°C, la conversion du thiophène a été mesurée en revenant à 90°C (point retour), afin de suivre la désactivation du catalyseur à cette température.

Le taux de conversion du thiophène est calculé à partir de la mesure de la teneur en thiophène réalisée par chromatographie en phase gazeuse munie d'un détecteur spécifique de soufre.
- Dans une deuxième partie de l'expérience, constituant la phase de régénération du catalyseur, l'injection de charge A est arrêtée, et est remplacée par une injection de toluène, à 90°C, pendant 24 heures. Cette seconde partie de l'expérience est déclanchée lorsque la conversion du thiophène atteint 88% à 90°C (point retour), ce qui correspond dans le cas présent à une teneur en thiophène de la recette est de 13,2 ppm après 6 incréments successifs de température.

Au bout de 24 heures, l'injection de toluène est arrêtée, ce qui marque la fin de la seconde partie de l'expérience.
- Dans une troisième partie de l'expérience, la charge A est à nouveau injectée dans les mêmes conditions de température (90°C), de pression et de débit que dans la première partie de l'expérience.

Un échantillon des effluents de réaction est prélevé au bout de 12 heures après le début de la troisième partie de l'expérience, c'est à dire après l'injection de la charge A. Cet échantillon est analysé afin d'obtenir une mesure de l'activité du catalyseur.

La teneur en thiophène mesurée dans l'échantillon est de 2,1 ppm, ce qui correspond à un taux de conversion du thiophène de 98% à 90°C , soit une conversion du même niveau que celle obtenue dans la première partie de l'expérience.

La procédure de régénération en utilisant du toluène comme agent de régénération permet donc de restaurer l'activité du catalyseur.

Les exemples 2 et 3 qui suivent, illustrent la possibilité de restaurer l'activité du catalyseur, tout en continuant à convertir les composés thiophéniques.

### Exemple 2 (Comparatif)

Une charge B constituée de l'essence A additivée d'éthanol à hauteur de 5% poids, est préparée. L'essence A est traitée dans des conditions identiques à l'exemple 1, avec un nouveau chargement de résine Amberlyst 15.
- Dans une première partie de l'expérience, le taux de conversion de l'essence A est maintenu à plus de 90 % par augmentation de la température par des incréments de 10°C, comme dans l'exemple 1.
- Dans la deuxième partie de l'expérience, constituant la phase de régénération du catalyseur, l'essence A est remplacée par l'essence B, lorsque la teneur en thiophène dans la recette atteint 18 ppm, ce qui correspond à un taux de conversion du thiophène de 82%, à 90°C. L'essence B est injectée dans les mêmes conditions de débit, et de pression, et la température est augmentée à 110°C.

Au bout de 24 heures à partir du début de la seconde partie de l'expérience, un échantillon des effluents de réaction est prélevé, la teneur en thiophène mesurée est de 15 ppm, ce qui correspond à un taux de conversion du thiophène de 86%. Ce taux de conversion est certes inférieur à celui de la première partie de l'expérience, mais il permet néanmoins de continuer à effectuer la réaction d'alourdissement par alkylation, tout en régénérant le catalyseur.
- Dans une troisième partie de l'expérience, l'essence A est à nouveau injectée dans le réacteur en remplacement de l'essence B, et la température est ramenée à 90°C.

La teneur en thiophène mesurée au bout de 12 heures à partir du début de la troisième partie de l'expérience, est de 5,4 ppm, ce qui correspond à un taux de conversion de 95%, très proche du taux de conversion obtenu dans la première partie de l'expérience.

### Exemple 3 (Comparatif)

Une charge C constituée de l'essence A additivée de toluène à hauteur de 50% poids, est préparée. L'essence A est traitée dans des conditions identiques à l'exemple 1, avec un nouveau chargement de résine Amberlyst 15.
- Dans une première partie de l'expérience, le taux de conversion de l'essence A est maintenu à plus de 90 % par augmentation de la température par des incréments de 10°C, comme dans l'exemple 1.
- Dans une deuxième partie de l'expérience, constituant la phase de régénération du catalyseur, lorsque la teneur en thiophène dans la recette atteint 15 ppm, ce qui correspond à un taux de conversion du thiophène de 86%, à 90°C, l'essence A est remplacée par l'essence B.

L'essence B est injectée dans les mêmes conditions de débit, de pression et de température.

Au bout de 24 heures à partir du début de la seconde partie de l'expérience, un échantillon des effluents de réaction est prélevé, la teneur en thiophène mesurée est de 3 ppm, ce qui correspond à un taux de conversion du thiophène de 94%. Ce taux de conversion permet de continuer à effectuer la réaction d'alourdissement par alkylation, tout en régénérant le catalyseur. - Dans une troisième partie de l'expérience, l'essence A est à nouveau injectée dans le réacteur en remplacement de l'essence C, et la température est maintenue à 90°C.

La teneur en thiophène mesurée au bout de 12 heures à partir du début de la troisième partie de l'expérience, est de 3,6 ppm, ce qui correspond à un taux de conversion de 96%, très proche du taux de conversion obtenu dans la première partie de l'expérience.

## Revendications

1. Procédé de désulfuration d'une coupe essence contenant des oléfines, des composés soufrés et éventuellement des molécules appartenant aux coupes C3 et C4, comprenant au moins:
- une première étape A de mise en contact de la dite coupe essence avec un catalyseur acide sélectionné dans le groupe constitué par les résines acides, l'acide phosphorique supporté sur silice et les zéolithes, permettant d'effectuer une réaction d'alkylation entre les oléfines et les composés soufrés de la dite coupe essence, et produisant des composés soufrés alourdis,
- une seconde étape B de fractionnement du mélange issu de la première étape qui permet de produire, une fraction légère dont la teneur en soufre est diminuée par rapport à la charge, et une fraction lourde qui concentre les composés soufrés alourdis,
- une troisième étape C de régénération du catalyseur utilisé dans l'étape A, dans laquelle ladite coupe essence est substituée en totalité par l'agent de régénération, ladite étape C consistant à mettre en contact le catalyseur avec un agent de régénération constitué d'une fraction hydrocarbonée aromatique comprenant des composés oléfiniques et aromatiques et dont le rapport molaire entre composés oléfiniques et composés aromatiques est compris entre 0 et 1, ladite étape C ayant une durée comprise entre 10 heures et 100 heures et dans le cas où le catalyseur utilisé est de la résine acide, la température de l'étape C est comprise entre 30°C et 180°C, dans le cas des catalyseurs acides de type acide phosphorique supporté sur silice, la température de l'étape C est comprise entre 100°C et 300°C, dans le cas des catalyseurs acides de type zéolithes, la température de l'étape C est comprise entre 100°C et 300°C.

2. Procédé de désulfuration d'une coupe essence selon la revendication 1 dans lequel le catalyseur acide utilisé est choisi parmi les résines acide échangeuses d'ions.

3. Procédé de désulfuration d'une coupe essence selon la revendication 2, dans lequel la résine acide a une capacité acide supérieure à 4,7 équivalents par kg, et préférentiellement supérieure à 5,0 équivalents par kg.

4. Procédé de désulfuration d'une coupe essence selon la revendication 2, dans lequel la résine acide utilisée a une taille de particules moyenne inférieure à 2 mm.

5. Procédé de désulfuration d'une coupe essence selon la revendication 1, dans lequel le catalyseur contient de l'acide phosphorique mélangé à de la silice, avec une teneur en acide phosphorique supérieure à 50% poids.

6. Procédé de désulfuration d'une coupe essence selon la revendication 1 dans lequel le catalyseur est une zéolithe choisie dans le groupe constitué par les zéolithes Y, beta, ZSM-5, ZSM-3 et ZSM-20, ZSM-57, NU-88, NU-87, NU-86, EU-1.

7. Procédé de désulfuration d'une coupe essence selon l'une quelconque des revendications 1 à 6 dans lequel la température opératoire de l'étape A est comprise entre 30°C et 300°C, la pression opératoire de l'étape A est comprise 0,5 MPa et 6,0 MPa et la VVH est comprise entre 0,1 h⁻¹ et 10 h⁻¹.

8. Procédé de désulfuration d'une coupe essence selon l'une quelconque des revendications 1 à 7 dans lequel, lorsque la charge à traiter contient plus de 20 ppm d'azote, et préférentiellement plus de 50 ppm d'azote, la dite charge est prétraitée dans une étape d'extraction des composés azotés.

## Claims

1. A process for the desulphurisation of a petroleum cut that contains olefins, sulphur-containing compounds and optionally molecules that belong to the C3 and C4 cuts, comprising at least:
- a first stage A for bringing said petroleum cut into contact with an acid catalyst selected from the group formed by acid resins, phosphoric acid supported on silica and zeolites, that makes it possible to carry out an alkylation reaction between the olefins and the sulphur-containing compounds of said petroleum cut and that produces sulphur-containing compounds that are increased in weight,
- a second stage B for fractionation of the mixture that is obtained from the first stage that makes it possible to produce a light fraction whose sulphur content is reduced relative to the feedstock and a heavy fraction that concentrates the sulphur-containing compounds that are increased in weight,
- a third stage C for regeneration of the catalyst that is used in stage A in which said petroleum cut is totally substituted by the regeneration agent, said stage C consisting of bringing the catalyst into contact with a regeneration agent formed by an aromatic hydrocarbon fraction comprising olefinic and aromatic compounds and in which the molar ratio between the olefinic compounds and the aromatic compounds is between 0 and 1, said stage C being of a duration of between 10 hours and 100 hours and in the case where the catalyst used is acid resin the temperature of stage C is between 30°C and 18°C, in the case of the acid catalysts of phosphoric acid type supported on silica the temperature of stage C is between 100°C and 300°C, and in the case of the acid catalysts of zeolite type the temperature of stage C is between 100°C and 300°C.

2. A process for the desulphurisation of a petroleum cut according to claim 1 in which the acid catalyst that is used is selected from among ion exchange acid resins.

3. A process for the desulphurisation of a petroleum cut according to claim 2 in which the acid resin has an acid capacity of more than 4.7 equivalents per kg and preferably more than 5.0 equivalents per kg.

4. A process for the desulphurisation of a petroleum cut according to claim 2 in which the acid resin that is used has a mean particle size of less than 2 mm.

5. A process for the desulphurisation of a petroleum cut according to claim 1 in which the catalyst contains phosphoric acid that is mixed with silica, with a phosphoric acid content of more than 50% by weight.

6. A process for the desulphurisation of a petroleum cut according to claim 1 in which the catalyst is a zeolite that is selected from the group that consists of the Y, beta, ZSM-5, ZSM-3 and ZSM-20, ZSM-57, NU-88, NU-87, NU-86 and EU-1 zeolites.

7. A process for the desulphurisation of a petroleum cut according to any one of claims 1 to 6 in which the operating temperature of the stage A is between 30° C and 300° C., the operating pressure of stage A is between 0.5 MPa and 6.0 MPa, and the VVH is between 0.1 h⁻¹ and 10 h⁻¹.

8. A process for the desulphurisation of a petroleum cut according to any one of claims 1 to 7 in which, when the feedstock to be treated contains more than 20 ppm of nitrogen, and preferably more than 50 ppm of nitrogen, said feedstock is pretreated in a stage for extracting nitrogen-containing compounds.

## Patentansprüche

1. Verfahren zur Entschwefelung eines Benzinschnitts, der Olefine, schwefelhaltige Verbindungen und gegebenenfalls Moleküle enthält, die zu den C3- und C4-Schnitten gehören, das mindestens umfasst:
- einen ersten Schritt A des Inkontaktbringens des Benzinschnitts mit einem Säurekatalysator, der ausgewählt ist aus der Gruppe bestehend aus Säureharzen, auf Siliciumdioxid geträgerter Phosphorsäure und Zeolithen, der es ermöglicht, eine Alkylierungsreaktion zwischen den Olefinen und den schwefelhaltigen Verbindungen des Benzinschnitts durchzuführen, und schwerere schwefelhaltige Verbindungen zu produzieren,
- einen zweiten Schritt B der Fraktionierung des Gemischs, das aus dem ersten Schritt stammt, der es ermöglicht, eine leichte Fraktion, deren Schwefelgehalt im Vergleich mit der Beschickung verringert ist, und eine schwere Fraktion zu produzieren, die die schwereren schwefelhaltigen Verbindungen konzentriert,
- einen dritten Schritt C zur Regeneration des in Schritt A verwendeten Katalysators, wobei der Benzinschnitt vollständig durch das Regenerationsmittel substituiert wird, wobei der Schritt C darin besteht, den Katalysator mit einem Regenerationsmittel in Kontakt zu bringen, das aus einer aromatischen Kohlenwasserstofffraktion besteht, die olefinische und aromatische Verbindungen umfasst, und deren Molverhältnis zwischen olefinischen Verbindungen und aromatischen Verbindungen im Bereich zwischen 0 und 1 liegt, wobei Schritt C eine Dauer im Bereich zwischen 10 Stunden und 100 Stunden hat und falls der verwendete Katalysator Säureharz ist, die Temperatur des Schritts C im Bereich zwischen 30 °C und 180 °C liegt, falls der Säurekatalysatoren vom Typ auf Siliciumdioxid geträgerter Phosphorsäure ist, die Temperatur des Schritts C im Bereich zwischen 100 °C und 300 °C liegt, falls der Säurekatalysator vom Typ Zeolith ist, die Temperatur des Schritts C im Bereich zwischen 100 °C und 300 °C liegt.

2. Verfahren zur Entschwefelung eines Benzinschnitts nach Anspruch 1, wobei der Säurekatalysator aus den lonenaustauschersäureharzen ausgewählt ist.

3. Verfahren zur Entschwefelung eines Benzinschnitts nach Anspruch 2, wobei das Säureharz eine Säurekapazität größer als 4,7 Äquivalente pro kg und bevorzugt größer als 5,0 Äquivalente pro kg hat.

4. Verfahren zur Entschwefelung eines Benzinschnitts nach Anspruch 2, wobei das verwendete Säureharz eine mittlere Teilchengröße von kleiner als 2 mm hat.

5. Verfahren zur Entschwefelung eines Benzinschnitts nach Anspruch 1, wobei der Katalysator mit Siliciumdioxid gemischte Phosphorsäure mit einem Phosphorsäuregehalt von mehr als 50 Gew.-% enthält.

6. Verfahren zur Entschwefelung eines Benzinschnitts nach Anspruch 1, wobei der Katalysator ein Zeolith ist, ausgewählt aus der Gruppe bestehend aus den Zeolithen Y, Beta, ZSM-5, ZSM-3 und ZSM-20, ZSM-57, NU-88, NU-87, NU-86, EU-1.

7. Verfahren zur Entschwefelung eines Benzinschnitts nach irgendeinem der Ansprüche 1 bis 6, wobei die Betriebstemperatur des Schritts A im Bereich zwischen 30 °C und 300 °C, der Betriebsdruck des Schritts A im Bereich zwischen 0,5 MPa und 6,0 MPa und die HSV im Bereich zwischen 0,1 h⁻¹ und 10 h⁻¹ liegt.

8. Verfahren zur Entschwefelung eines Benzinschnitts nach irgendeinem der Ansprüche 1 bis 7, wobei, wenn die zu behandelnde Beschickung mehr als 20 ppm Stickstoff, und vorzugsweise mehr als 50 ppm Stickstoff enthält, die Beschickung in einem Schritt zur Extraktion der stickstoffhaltigen Verbindungen vorbehandelt wird.
